# EUROPÄISCHE PATENTSCHRIFT

(11) **EP 4 303 111 B1**
(45) Veröffentlichungstag und Bekanntmachung des Hinweises auf die Patenterteilung: **07.05.2025**
(21) Anmeldenummer: 23161908.1
(22) Anmeldetag: 14.03.2023
(51) Int. Cl.: B62K 21/06, B62J 6/03

(54) **MITLENKBARES FAHRUNTERSTÜTZUNGSSYSTEM EINES FAHRRADS UND/ODER LEVS SOWIE EIN FAHRRAD UND/ODER LEV MIT EINEM DERARTIGEN MITLENKBAREN FAHRUNTERSÜTZUNGSSYSTEM**
TURNING DRIVE ASSIST SYSTEM OF A BICYCLE AND/OR LEV AND BICYCLE AND/OR LEV WITH SUCH A TURNING DRIVE ASSIST SYSTEM
SYSTÈME D'AIDE À LA CONDUITE ORIENTABLE D'UN VÉLO ET/OU D'UN VÉLO ET/OU D'UN VÉLO ET/OU D'UN VÉLO ÉQUIPÉ D'UN TEL SYSTÈME D'AIDE À LA CONDUITE

(30) Priorität: 08.07.2022 EP 22183832
(43) Veröffentlichungstag der Anmeldung: 10.01.2024
(73) Patentinhaber: ADP Engineering GmbH, 64807 Dieburg (DE)
(72) Erfinder: Böhm, Peter, 64807 Dieburg (DE)
(74) Vertreter: Isarpatent

(56) Entgegenhaltungen:
- EP-A1- 3 395 660
- GB-A- 2 492 742
- US-A- 2 499 937
- US-A- 5 492 033
- US-A1- 2022 066 448

## Beschreibung

Die vorliegende Erfindung betrifft ein Fahrrad und/oder LEV (Light Electric Vehicle) mit einem mitlenkbaren Fahrunterstützungssystem.

Obwohl die vorliegende Erfindung für sämtliche Fahrräder und LEVs anwendbar ist, wird sie im Folgenden der Einfachheit halber beispielhaft anhand eines Fahrrads näher erläutert.

Aus dem Stand der Technik ist als ein Fahrunterstützungssystem eine Lichteinheit bekannt, welche insbesondere am Lenker oder im Bereich des vorderen Schutzblechs an der Federgabel eines Fahrrads derart befestigbar ist, dass sie bei einer Lenkbewegung des Lenkers mitgelenkt wird.

Es ist ferner bekannt, dass bei LEVs die Lichteinheiten mit der Batterieantriebseinheit gekoppelt und durch diese gespeist werden können.

Bei diesen Ansätzen hat sich allerdings die Tatsache als nachteilig herausgestellt,
dass die bekannten Lichteinheiten beispielsweise bei einem Sturz oder einer andersartigen Krafteinwirkung einen Defekt erleiden können, äußeren Witterungseinflüssen direkt ausgesetzt sind und gegen Diebstahl meist nicht ausreichend geschützt sind.

Ein weiteres Fahrrad mit einem Fahrunterstützungssystem des Standes der Technik ist in dem Dokument GB2492742A offenbart, welches die Merkmale der Präambel des Anspruchs 1 zeigt.

Vor diesem Hintergrund liegt der vorliegenden Erfindung die Aufgabe zugrunde, ein verbessertes mitlenkbares Fahrunterstützungssystem zu gestalten. Erfindungsgemäß wird diese Aufgabe durch ein mitlenkbares Fahrunterstützungssystem eines Fahrrads und/oder LEVs mit den Merkmalen des Anspruchs 1 gelöst.

Demgemäß ist ein mitlenkbares Fahrunterstützungssystem für ein Fahrrad und/oder LEV vorgesehen, mit einer Befestigungseinrichtung, welche einen Befestigungsabschnitt für eine Befestigung des Fahrunterstützungssystems an einem in ein Steuerrohr einsetzbaren Gabelschaft des Fahrrads und/oder LEVs aufweist; und einer Funktionseinheit, welche mit der Befestigungseinrichtung derart verbunden ist und eine derartige geometrische Abmessung aufweist, dass bei einer Befestigung des Fahrunterstützungssystems an dem in einem Steuerrohr eingesetzten Gabelschaft des Fahrrads und/oder LEVs mittels der Befestigungseinrichtung eine mitgelenkte Drehbewegung der Funktionseinheit innerhalb des Steuerrohrs des Fahrrads und/oder LEVs hindernisfrei gewährleistet ist.

Erfindungsgemäß ist ein Fahrrad und/oder LEV vorgesehen, welches ein derartiges mitlenkbares Fahrunterstützungssystem aufweist.

Die der vorliegenden Erfindung zugrunde liegende Idee besteht darin, die Funktionseinheit, welche beispielsweise als Lichteinheit ausgebildet ist, über eine Befestigungseinrichtung an einem Gabelschaft des Fahrrads und/oder LEVs derart zu montieren, dass sich das Fahrunterstützungssystem bei entsprechender geometrischer Ausgestaltung desselben im Betrieb des Fahrrads und/oder LEVs vollständig in dem Steuerrohr eingesetzt befindet, und bei einer Betätigung des Lenkers diese Lenkbewegung im Inneren des Steuerrohrs hindernisfrei mit ausführen kann.

Somit wird vorteilhaft ein mitlenkbares Fahrunterstützungssystem geliefert, welches fest in dem Steuerrohr und somit gegenüber Diebstahl und Witterungseinflüssen geschützt vorgesehen ist. Des Weiteren wird das Fahrunterstützungssystem auch besser vor Beschädigungen durch äußere Krafteinwirkungen geschützt, da das Fahrunterstützungssystem im Inneren des Steuerrohrs verdeckt aufgenommen ist. Ferner gewährleistet die vorliegende Erfindung einen verbesserten ästhetischen Gesamteindruck des Fahrrads und/oder LEVs, da den optischen Gesamteindruck störende und an der Gabel oder dem Lenker angebrachte Funktionseinheiten vermieden werden. Folglich wird vorteilhaft eine von außen vollständig unsichtbare und vor Witterungseinflüssen geschützte Integration des Fahrunterstützungssystems geschaffen, was für eine ausgezeichnete ästhetische Anmutung des Fahrrads und/oder LEVs sorgt. Des Weiteren wird vorteilhaft die Integration einer internen Kabelverlegung für eine elektrische Verbindung der Funktionseinheit mit einer zugeordneten Batterie ermöglicht.

Gemäß einer bevorzugten Weiterbildung ist der Befestigungsabschnitt der Befestigungseinrichtung als mittels einer reibschlüssigen Verbindung, vorzugsweise einer Schraubverbindung, klemmbarer Ringklemmabschnitt ausgebildet, vorzugsweise für eine reibschlüssige Klemmung an einem zylindrischen Abschnitt des Gabelschaftes, wobei vorzugsweise das Anzugsdrehmoment dieser Verbindung in einem Bereich von 1 bis 5 Nm, bevorzugt in einem Bereich von 2 bis 4 Nm, liegt und weiter bevorzugt in etwa 3 Nm beträgt. Es ist auch eine andere Konfiguration, beispielsweise ein Pressverband (Gabelkonus-Prinzip) vorstellbar. Hierbei wird die drehmomentgesteuerte Klemmkraft durch die Wahl der Passung ersetzt. Hierdurch kann auf einfache und kostengünstige Weise eine Befestigung der Funktionseinheit an dem Gabelschaft gewährleistet werden.

Gemäß einer weiteren bevorzugten Weiterbildung ist der Ringklemmabschnitt für einen geeigneten Energieabbau im Falle einer rotatorischen Krafteinwirkung mittels eines vorbestimmten Anzugsdrehmomentes der Schraubverbindung mit einer vorbestimmten Reibschlusskraft an dem Gabelschaft angebracht, wobei vorzugsweise bei einer derartigen reibschlüssigen Verbindung ein maximal übertragbares Drehmoment bzw. Losbrechmoment in einem Bereich von vorzugsweise 4 bis 90 Nm, bevorzugt in einem Bereich von 10 bis 70 Nm und weiter bevorzugt in einem Bereich von 15 bis 50 Nm vorgesehen ist. Dadurch wird vorteilhaft verhindert, dass bei einer größeren Krafteinwirkung eine Beschädigung von Bauteilen des erfindungsgemäßen Systems erfolgen kann.

Gemäß einer weiteren bevorzugten Weiterbildung weist die Befestigungseinrichtung einen Befestigungsvorsprung auf, welcher sich von einem radialen Randbereich aus in etwa in Richtung einer Längsachse der Befestigungseinrichtung erstreckt, an welchem die Funktionseinheit, beispielsweise mittels einer Schraubverbindung, Klickverbindung, Klemmverbindung, magnetischen Verbindung oder dergleichen, angebracht oder einteilig angeformt ist. Dadurch kann die Funktionseinheit über die Befestigungseinrichtung und den Befestigungsvorsprung an einer optimierten Position innerhalb des Steuerrohrs fest an dem Gabelschaft montiert werden, sodass einerseits die Funktion der Funktionseinheit reibungslos gewährleistet und andererseits eine Drehbewegung der Funktionseinheit innerhalb des Steuerrohrs jederzeit hindernisfrei gewährleistet ist.

Gemäß einer weiteren bevorzugten Weiterbildung weist der Befestigungsvorsprung einen sich in Längsrichtung der Längsachse erstreckenden Stegabschnitt auf, welcher vorzugsweise zwischen dem Befestigungsabschnitt der Befestigungseinrichtung und der Funktionseinheit angeordnet ist. Aufgrund des Stegabschnitts kann die Funktionseinheit vorteilhaft von der Befestigungseinrichtung in Längsrichtung der Längsachse derart beabstandet vorgesehen werden, dass eine optimierte Positionierung die bauraumtechnischen Gegebenheiten berücksichtigend gewährleistet ist.

Gemäß einer weiteren bevorzugten Weiterbildung weist der Stegabschnitt zwei in etwa sich in Richtung der Längsachse parallel zueinander erstreckende und durch einen Spalt voneinander beabstandete Schenkel auf, wobei die Funktionseinheit an zumindest einem der Schenkel angebracht ist. Hierdurch kann die Befestigungseinrichtung mittels des Spaltes fest an dem Gabelschaft mit einer zugeordneten Schraubverbindung oder dergleichen geklemmt werden, ohne dass die hierdurch verursachte Breitenveränderung des Spaltes der Anbringung der Funktionseinheit an dem Stegabschnitt im Wege steht, beispielsweise durch unerwünschte Materialspannungen.

Gemäß einer weiteren bevorzugten Weiterbildung weist der Stegabschnitt eine Anschlagseinrichtung zum Begrenzen des Lenkeinschlagwinkels des Fahrrads und/oder LEVs auf, wobei vorzugsweise jeweils die von dem Stegabschnitt zur Seite gewandten Seitenwandabschnitte der jeweiligen Schenkel Anschlagsabschnitte der Anschlagseinrichtung bilden. Dadurch weisen die Schenkel des Stegabschnitts eine Doppelfunktion auf, da zum einen die Funktionseinheit an zumindest einem der Schenkel angebracht ist und die Schenkel ferner die Anschlagsabschnitte bei Verwendung eines Systems zum Begrenzen des Lenkeinschlagwinkels bilden.

Gemäß einer weiteren bevorzugten Weiterbildung sind als der Anschlagseinrichtung zugeordnete Gegenanschlagseinrichtung zum Begrenzen des Lenkeinschlagwinkels rahmenseitige Gegenanschlagselemente an dem Steuerrohr des Fahrrads und/oder LEVs vorgesehen, welche beispielsweise einteilig mit dem Steuerrohr des Fahrrads und/oder LEVs ausgebildet oder als mittels einer Schraubverbindung im Steuerrohr des Fahrrads und/oder LEVs befestigte Gegenanschlagselemente vorgesehen sind, welche beispielsweise über im Steuerrohr vorgesehene Langlöcher höhenverstellbar sind. Dadurch liefert das System vorteilhaft eine integrierte Lenkeinschlag-Winkelbegrenzung, wobei vorteilhaft auf Bauteile des erfindungsgemäßen Systems zurückgegriffen werden kann. Dies stellt eine kostengünstige und mit einem geringen Montageaufwand verbundene Lenkeinschlag-Winkelbegrenzung dar.

Erfindungsgemäß ist die Funktionseinheit als Frontlichtsystem, Radarsystem, Kamerasystem, Lasersystem, Ultraschallsystem, Lidarsystem oder dergleichen oder als eine Kombination der Vorhergesagten ausgebildet und/oder weist eine Blende auf, welche als Funktionsbauteil ausgebildet ist, beispielsweise zum Schutz der Funktionseinheit vor Witterungseinflüssen, als Schutz der Funktionseinheit vor Diebstahl oder Beschädigung, als Linsensystem zur Bündelung und/oder Reduktion des Lichtkegels, als Reflektoreinheit, als Tönungsmittel zur Abdunkelung bestimmter Lichtaustrittsbereiche oder dergleichen. Dies schafft vorteilhaft eine Art Baukastenprinzip, sodass je nach Bedarf die Funktionseinheit eine oder mehrere der vorhergesagten Systeme beinhalten kann. Je nach gewünschtem System kann dabei der vordere Bereich des Steuerrohrs entsprechend derart angepasst werden, dass die jeweils gewünschte Funktionseinheit ihre Funktion uneingeschränkt ausführen kann.

Gemäß einer weiteren bevorzugten Weiterbildung ist die Funktionseinheit in ihrer geometrischen Ausgestaltung derart an die Kontur des zugeordneten Abschnitts des Gabelschaftes und/oder der Innenkrümmung des Steuerrohrs angepasst, dass eine in etwa bündige Anlage an dem zugeordneten Abschnitt des Gabelschaftes und/oder eine kollisionsfreie Drehbewegung gewährleistet ist. Hierdurch wird der zur Verfügung stehende Bauraum vorteilhaft in optimaler Weise ausgenutzt und es wird gewährleistet, dass bei einer Lenkbewegung des Gabelschaftes die Funktionseinheit ohne Kollision mit Innenflächen des Steuerrohrs vonstatten läuft.

Gemäß einer weiteren bevorzugten Weiterbildung des beanspruchten Fahrrads und/oder LEVs weist das Steuerrohr im vorderen Bereich eine Ausschnittsöffnung auf, welche in ihrer geometrischen Abmessung, ihrer umfänglichen Erstreckung und/oder ihrer Transparenz an die Wirkungsweise der Funktionseinheit entsprechend angepasst ist. Somit kann vorteilhaft die Geometrie und Transparenz an die jeweils verwendeten Funktionseinheiten angepasst werden und ein ästhetisch anmutender Gesamteindruck aufgrund der Formintegrität gewährleistet werden.

Gemäß einer weiteren bevorzugten Weiterbildung ist die Ausschnittsöffnung als Revisionsöffnung zur Montage, zum Austausch und/oder zur Einstellung der Funktionseinheit und/oder der Befestigungseinrichtung vorgesehen. Die Revisionsöffnung ermöglicht einen Zugang von außen zu der Befestigungseinrichtung und zu der Funktionseinheit, ohne das System aus dem Steuerrohr entfernen zu müssen. Dadurch können vorteilhaft auf einfache und kostengünstige Weise die Funktionseinheiten bei Bedarf ersetzt, ausgetauscht oder neu ausgerichtet werden, wobei hierfür ein geringer Aufwand und somit eine kostengünstige Lösung vorgesehen ist.

Gemäß einer weiteren bevorzugten Weiterbildung ist die Ausschnittsöffnung mittels eines vorzugsweise transparenten Deckels verschließbar, welcher beispielsweise mittels einer Clipsverbindung, Klemmverbindung, Schraubverbindung, magnetischen Verbindung oder dergleichen an der Ausschnittsöffnung, vorzugsweise bündig, anbringbar ist. Zudem sorgt der Deckel entsprechend der Ausgestaltung auch für einen ästhetisch anmutenden Eindruck.

Gemäß einer weiteren bevorzugten Weiterbildung ist der transparente Deckel als Funktionsbauteil ausgebildet, beispielsweise zur Verhinderung von Witterungseinflüssen, als Schutz der Funktionseinheit vor Diebstahl oder Beschädigung, als Linsensystem zur Bündelung und/oder Reduktion des Lichtkegels, als Reflektoreinheit, zur Abdunkelung bestimmter Lichtaustrittsbereiche oder dergleichen. Somit liefert der Deckel vorteilhaft einen Schutz vor äußeren Witterungseinflüssen oder eintretendem Wasser und kann ferner vorteilhaft einen Diebstahlschutz darstellen und weitere vorteilhafte Funktionen übernehmen.

Die vorliegende Erfindung wird nachfolgend anhand der in den schematischen Figuren der Zeichnung angegebenen Ausführungsbeispiele näher erläutert. Es zeigen dabei:
- Fig. 1: eine perspektivische Ansicht einer Befestigungseinrichtung gemäß einem ersten bevorzugten Ausführungsbeispiel der vorliegenden Erfindung;
- Fig. 2: eine perspektivische Ansicht einer Funktionseinheit gemäß einem bevorzugten Ausführungsbeispiel der vorliegenden Erfindung;
- Fig. 3: eine Draufsicht auf die Funktionseinheit aus Fig. 2;
- Fig. 4: eine Seitenansicht der Funktionseinheit aus den Figuren 2 und 3, welche an der Befestigungseinrichtung aus Fig. 1 angebracht ist;
- Fig. 5: eine Seitenansicht eines an einem Gabelschaft montierten Fahrunterstützungssystems gemäß dem ersten bevorzugten Ausführungsbeispiel der vorliegenden Erfindung;
- Fig. 6: eine Seitenansicht einer Befestigungseinrichtung gemäß einem zweiten bevorzugten Ausführungsbeispiel der vorliegenden Erfindung;
- Fig. 7: eine Vorderansicht der Befestigungseinrichtung aus Figur 6 gemäß dem zweiten bevorzugten Ausführungsbeispiel der vorliegenden Erfindung;
- Fig. 8: eine perspektivische Ansicht einer Befestigungseinrichtung gemäß einem dritten bevorzugten Ausführungsbeispiel der vorliegenden Erfindung;
- Fig. 9: eine erste Schnittdarstellung eines Steuerrohrs mit einer Gegenanschlagseinrichtung gemäß einem ersten bevorzugten Ausführungsbeispiel der vorliegenden Erfindung;
- Fig. 10: eine zweite Schnittdarstellung des Steuerrohrs mit der Gegenanschlagseinrichtung gemäß dem ersten bevorzugten Ausführungsbeispiel der vorliegenden Erfindung aus Figur 9;
- Fig. 11: eine Befestigungseinrichtung gemäß dem zweiten Ausführungsbeispiel mit zugeordneter Gegenanschlagseinrichtung gemäß einem weiteren Ausführungsbeispiel der vorliegenden Erfindung;
- Fig. 12: eine Perspektivansicht eines Fahrunterstützungssystems mit zugeordneter Gegenanschlagseinrichtung gemäß einem bevorzugten Ausführungsbeispiel der vorliegenden Erfindung, welches an einem Gabelschaft montiert ist;
- Fig. 13: eine Draufsicht auf das an einem Gabelschaft angebrachte Fahrunterstützungssystem aus Fig. 12;
- Fig. 14: eine Vorderansicht eines in ein Steuerrohr integriertes Fahrunterstützungssystem gemäß einem bevorzugten Ausführungsbeispiel der vorliegenden Erfindung; und
- Fig. 15: eine perspektivische Ansicht des Steuerrohrs aus Figur 14 mit einem der Ausschnittsöffnung zugeordneten Verschlussdeckel gemäß einem bevorzugten Ausführungsbeispiel der vorliegenden Erfindung.

Die beiliegenden Figuren sollen ein weiteres Verständnis der Ausführungsformen der Erfindung vermitteln. Sie veranschaulichen Ausführungsformen und dienen im Zusammenhang mit der Beschreibung der Erklärung von Prinzipien und Konzepten der Erfindung. Andere Ausgestaltungen und viele der genannten Vorteile ergeben sich im Hinblick auf die Figuren der Zeichnung. Die Elemente der Figuren sind nicht notwendigerweise maßstabsgetreu zueinander gezeigt.

In den Figuren der Zeichnung sind gleiche, funktionsgleiche und gleichwirkende Elemente, Merkmale und Komponenten - sofern nichts Gegenteiliges ausgeführt ist - jeweils mit denselben Bezugszeichen versehen.

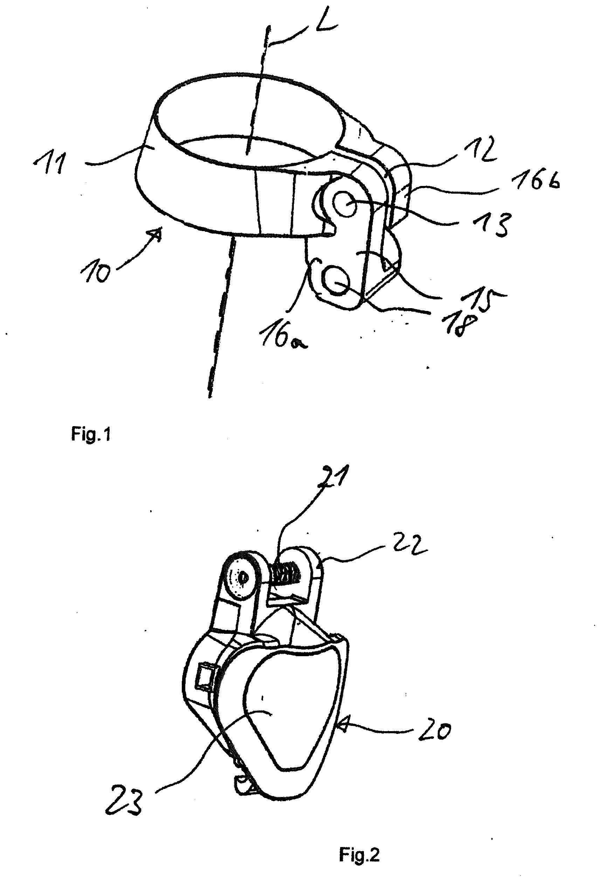

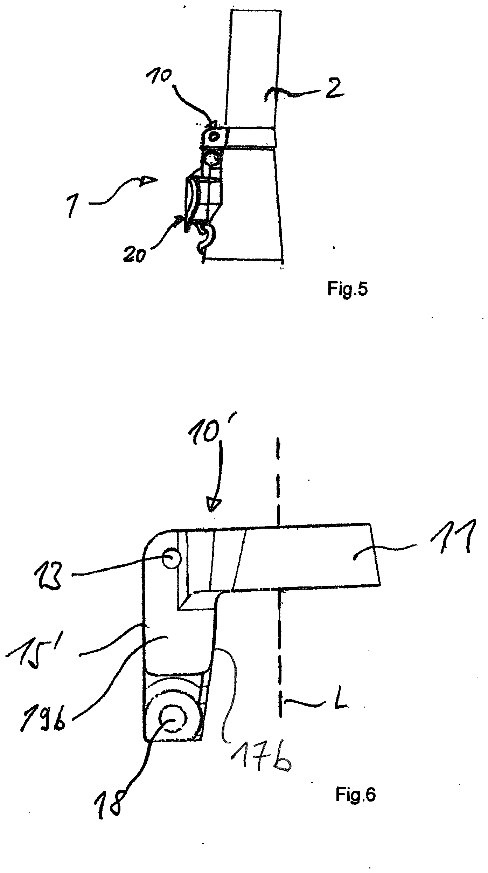

Die Figuren 1 bis 5 illustrieren ein mitlenkbares Fahrunterstützungssystem 1 gemäß einem ersten Ausführungsbeispiel der vorliegenden Erfindung. Das mitlenkbare Fahrunterstützungssystem 1 besteht aus einer Befestigungseinrichtung 10, welche in Fig. 1 in perspektivischer Darstellung illustriert ist. Die Befestigungseinrichtung 10 gemäß dem ersten bevorzugten Ausführungsbeispiel weist einen Befestigungsabschnitt 11 auf, welcher vorzugsweise als ringförmiger Klemmkonus bzw. ringförmiger Klemmabschnitt ausgebildet ist. Der ringförmige Klemmabschnitt 11 weist vorzugsweise einen Spalt 12 sowie eine Schraubverbindung 13 auf, derart, dass mittels der Schraubverbindung 13 der Innendurchmesser des ringförmigen Klemmabschnitts 11 variierbar ist. In Fig. 1 ist ein der Schraubverbindung zugeordnetes Schraubenloch dargestellt. Dadurch wird bei einer Anbringung der Befestigungseinrichtung 10 an einem vorzugsweise zylindrischen Abschnitt des zugeordneten Gabelschaftes 2 eines Fahrrads oder LEVs, wie in Fig. 5 ersichtlich ist, eine reibschlüssige Klemmverbindung mit einer vorbestimmten Reibschlusskraft gewährleistet. Beispielsweise liegt das Anzugsdrehmoment dieser Verbindung in einem Bereich von 1 bis 5 Nm, bevorzugt in einem Bereich von 2 bis 4 Nm und weiter bevorzugt beträgt es 3 Nm. Vorliegende Werte und Wertebereiche sind lediglich als ungefähre Angaben zu verstehen. Es ist für einen Fachmann offensichtlich, dass je nach Anwendung auch andere Anzugsdrehmomente möglich sind.

Es ist auch eine andere Konfiguration, beispielsweise ein Pressverband (Gabelkonus-Prinzip), vorstellbar. Hierbei wird die drehmomentgesteuerte Klemmkraft durch die Wahl der Passung entsprechend ersetzt.

Die Befestigungseinrichtung 10 weist gemäß dem ersten bevorzugten Ausführungsbeispiel einen Befestigungsvorsprung 15 auf, welcher sich vorzugsweise in etwa parallel zu einer Längsachse L der Befestigungseinrichtung 10 erstreckt. Der Befestigungsvorsprung 15 besteht gemäß dem vorliegenden Ausführungsbeispiel aus zwei parallel zueinander verlaufenden Schenkel 16a, 16b, welche durch den mittigen Spalt 12 voneinander beabstandet vorgesehen sind, um die oben beschriebene gewünschte Klemmkraft für die Schraubverbindung 13 zu gewährleisten. Ferner ist vorzugsweise einer der beiden Schenkeln 16a gegenüber dem zweiten Schenkel 16b in Richtung der Längsachse L verlängert und am distalen Ende in Richtung des zweiten Schenkels 16b um in etwa 90 Grad derart abgekröpft ausgebildet, dass sein Endabschnitt in etwa unterhalb des zweiten Schenkels 16b beabstandet zu diesem angeordnet ist.

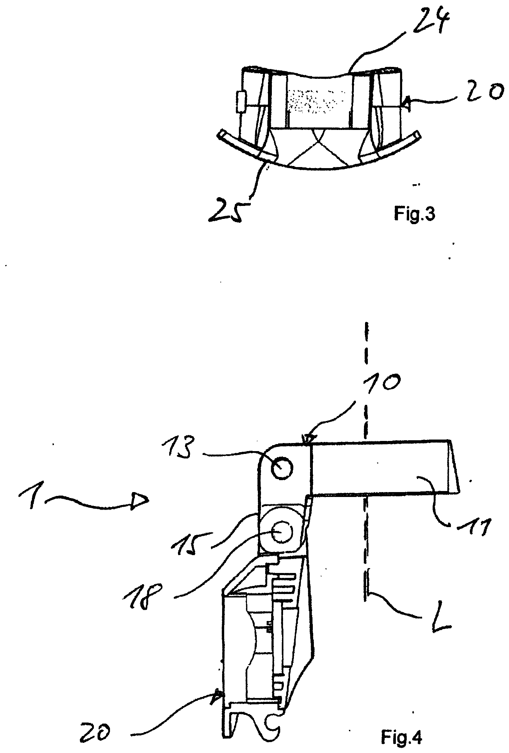

Wie insbesondere in den Figuren 1 und 4 ersichtlich ist, dient der distale Endbereich des ersten Schenkels 16a einer Anbringung der zugeordneten Funktionseinheit 20. Hierbei kann wiederum eine Schraubverbindung 18, 21 (Bezugszeichen 18 ist dem Schraubenloch und Bezugszeichen 21 der zugeordneten Schraube zugewiesen), eine Klickverbindung, eine Klemmverbindung, eine magnetische Verbindung oder dergleichen zur Anbringung der Funktionseinheit 20 vorgesehen sein. Ferner ist es auch möglich, dass die Funktionseinheit 20 einteilig mit dem Befestigungsvorsprung 15 ausgebildet ist. Die Funktionseinheit 20 ist somit beispielsweise über eine kraftschlüssige und/oder formschlüssige Verbindung mit dem Befestigungsvorsprung 15 der Befestigungseinrichtung 10 verbunden oder als integraler Bestandteil bei einer einteiligen Ausführung ausgestaltet und rotiert zusammen mit dem Gabelschaft 2 des Fahrrads oder LEVs.

Der die beiden Schenkel 16a, 16b umfassende Stegabschnitt der Befestigungseinrichtung 10 ist somit vorzugsweise zwischen dem Befestigungsabschnitt 11 und der Funktionseinheit 20 vorgesehen.

In den Figuren 2 und 3 ist eine Funktionseinheit 20 gemäß einem bevorzugten Ausführungsbeispiel der vorliegenden Erfindung in Perspektivdarstellung sowie in einer Draufsicht dargestellt. Gemäß diesem bevorzugten Ausführungsbeispiel weist die Funktionseinheit 20 zumindest ein Frontlichtsystem auf, welches beispielsweise als Leuchtmittel eine LED-Leuchtdiode oder dergleichen umfasst.

Des Weiteren weist die Funktionseinheit 20 zusätzlich oder alternativ zu dem genannten Frontlichtsystem weitere Fahrunterstützungsmodule auf, wie insbesondere ein Radarsystem, ein Kamerasystem, ein Lasersystem, ein Ultraschallsystem, ein Lidar-Sensorsystem oder andere Smart-Technologiesysteme. Hierbei dient das Frontlichtsystem einem Ausleuchten eines vorbestimmten Bereichs in Fahrtrichtung vor dem Fahrrad oder dem LEV in einem begrenzten Winkelbereich, wohingegen beispielsweise ein Radarsystem einer Geschwindigkeits- und Entfernungsmessung zu anderen Verkehrsteilnehmern, ein Laser- und Lidar-Sensorsystem in Kombination mit bestimmten Bremssystemen einer Hinderniserkennung und einer Kollisionsverhinderung und ein Kamera- und Infrarotkamerasystem insbesondere einer Verkehrsbeobachtung und einer Überwachung der Fahrbahn dient. Es ist für einen Fachmann offensichtlich, dass die oben genannten Systeme beliebig miteinander kombiniert werden können, sodass die Funktionseinheit 20 entsprechend ausgebildet werden kann oder sogar im Wege eines Baukastenprinzips durch jeweils gewünschte Systeme erweitert werden kann. Alle Systeme haben das Ziel, die Fahrsituation des Benutzers zu verbessern bzw. zu erfassen und ggf. bestimmte erfasste Daten oder Situationen an den Benutzer mittels einer Ausgabeeinheit auszugeben - dies kann über Bluetooth oder eine andere Wireless-Technologie an beispielsweise ein Display oder ein alternatives HMI erfolgen - und/oder entsprechende Fahrmanöver automatisch einzuleiten. Die einzelnen Systeme der Funktionseinheit 20, wie beispielsweise die oben genannte LED-Leuchtdiode des Lichtsystems sind im Inneren der Funktionseinheit 20 vorgesehen und vorzugsweise mittels einer durchlässigen Blende 23 abgedeckt. Die Blende 23 kann dabei als Funktionsbauteil ausgebildet sein, beispielsweise als Linsensystem zur Bündelung und/oder Reduktion des Lichtkegels, als Reflektoreinheit, als Tönungsmittel zur Abdunkelung bestimmter Lichtaustrittsbereiche oder dergleichen. Beispielsweise kann auch ein Visier oder Schild zum Richten des Lichtkegels oberhalb der Blende 23 vorgesehen sein.

Die Funktionseinheit 20 weist gemäß einem bevorzugten Ausführungsbeispiel, wie in Fig. 2 dargestellt ist, eine dem Schraubenloch 18 zugeordnete Schraube 21 auf, welche in das Schraubenloch 18 hindurchsteckbar und anziehbar ist, derart, dass die Funktionseinheit 20 mit einem vorbestimmten Anzugsmoment an dem Befestigungsvorsprung 15 der Befestigungseinrichtung 10 befestigt ist. Hierzu weist die Funktionseinheit 20 für eine stabile Anbringung einen zu dem distalen Endabschnitt des Befestigungsvorsprungs 15 vorzugsweise komplementären Befestigungsabschnitt 22 auf.

Wie insbesondere in Fig. 3 in der Draufsicht erkennbar ist, weist die Funktionseinheit 20 vorzugsweise im rückwärtigen Bereich eine an die Außenkrümmung des Gabelschafts 2 angepasste Kontur derart auf, dass rückseitig ein konkav gekrümmter Anlagebereich vorgesehen ist. Vorzugsweise erfolgt hierdurch eine bündige Anlage der Funktionseinheit 20 an dem zugeordneten Abschnitt des Gabelschafts 2, wie in Fig. 5 ersichtlich ist, sodass hierdurch für die Funktionseinheit 20 ein maximal großer Bauraum geschaffen und ein möglichst großer vertikaler Verstellbereich der Funktionseinheit 20 an dem Gabelschaft 2 im Inneren eines Steuerrohrs 4 gewährleistet wird. Ein Blockieren der Lenkung durch eine gekippte Funktionseinheit 20 im Steuerrohr 4 wird, wie oben bereits erläutert, vorzugsweise durch eine bündige Anlage über beispielsweise eine Formschräge zwischen der Funktionseinheit 20 und dem zugeordneten Abschnitt des Gabelschaftes 2 sowie gegebenenfalls durch vorhanden Lenkanschläge bzw. Gegenanschlagselemente gewährleistet. Die Drehbewegung der Funktionseinheit 20 wird aufgrund des Kraftflusses zwischen der Befestigungseinrichtung 10, an der die Funktionseinheit 20 angebracht ist, und dem Gabelschaft 2 proportional zu dem Drehwinkel des Lenkers umgesetzt.

Die geometrische Abmessung der Funktionseinheit 20 ist vorzugsweise derart ausgebildet, dass neben der oben genannten bündigen Anlage an dem Gabelschaft 2 eine Rotation innerhalb eines zugeordneten Steuerrohrs 4 ohne eine Kollision mit Abschnitten des Steuerrohrs 4 oder anderen Bauteilen gewährleistet ist. Hierzu kann die Funktionseinheit 20 ferner einen konvex gekrümmten Vorderabschnitt 25 aufweisen, der an den Innenradius des Steuerrohrs 4 derart angepasst ist, dass eine vorbestimmte Beabstandung zu der Innenwandung des Steuerrohrs 4 in jedem Rotationszustand vorteilhaft gewährleistet ist.

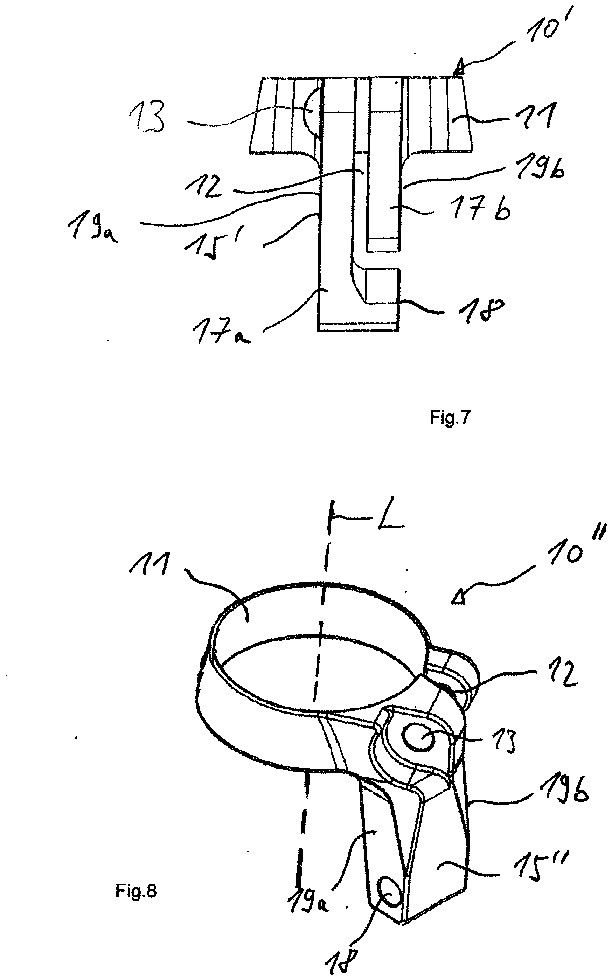

In den Figuren 6 und 7 ist eine Befestigungseinrichtung 10' gemäß einem zweiten bevorzugten Ausführungsbeispiel der vorliegenden Erfindung in einer Seitenansicht und einer Vorderansicht illustriert. Da dieses Ausführungsbeispiel vorzugsweise hinsichtlich des Befestigungsabschnitts 11 im Wesentlichen analog dem oben beschriebenen ersten Ausführungsbeispiel ausgestaltet ist, wird diesbezüglich auf die oben getätigten Ausführungen verwiesen.

Vorliegend kann allerdings bevorzugt bei einer derartigen reibkraftschlüssigen Verbindung der Befestigungseinrichtung 10' ein maximal übertragbares Drehmoment bzw. ein Losbrechmoment in einem Bereich von vorzugsweise 4 bis 90 Nm, bevorzugt in einem Bereich von 10 bis 70 Nm und weiter bevorzugt in einem Bereich von 15 bis 50 Nm vorgesehen sein. Vorliegende Werte und Wertebereiche sind lediglich als ungefähre Angaben zu verstehen, da das maximal übertragbare Drehmoment von mehreren Faktoren abhängt, wie beispielsweise dem Reibwert der jeweils verwendeten Reibpaarung. Es ist für einen Fachmann offensichtlich, dass je nach Anwendung auch andere Anzugsdrehmomente oder Losbrechmomente möglich sind.

Im Unterschied zum ersten Ausführungsbeispiel weist die Befestigungseinrichtung 10' gemäß dem zweiten Ausführungsbeispiel einen in Richtung der Längsachse L verlängerten Befestigungsvorsprung 15' auf, welcher wiederum einen ersten längeren Schenkel 17a und einen hiervon über den Spalt 12 beabstandeten zweiten kürzeren Schenkel 17b umfasst, die jeweils zur Außenseite hin gewandte Seitenwandabschnitte 19a und 19b aufweisen. Eine Anbringung der Funktionseinheit 20 an dem Befestigungsvorsprung 15' erfolgt in analoger Weise zu der Befestigung gemäß dem oben beschriebenem ersten Ausführungsbeispiel.

Hierbei bilden nun aufgrund der vergrößerten Längserstreckung die Seitenwandabschnitte 19a und 19b der beiden Schenkel 17a und 17b geeignete Anschlagsabschnitte einer Anschlagseinrichtung, welche bei einem System zum Begrenzen des Lenkeinschlagwinkels Verwendung finden. Die Begrenzung des Lenkeinschlagwinkels kann sinnvoll sein, um ein Blockieren der Lenkung durch die Funktionseinheit 20 zu verhindern. Die Funktion der Anschlagsabschnitte 19a und 19b bei Verwendung eines Systems zum Begrenzen des Lenkeinschlagwinkels wird weiter unten näher erläutert.

Fig. 8 illustriert eine Befestigungseinrichtung 10" gemäß einem dritten bevorzugten Ausführungsbeispiel der vorliegenden Erfindung. Im Unterschied zu der oben unter Bezugnahme auf die Figuren 6 und 7 erläuterten Ausgestaltung der Befestigungseinrichtung 10' weist die Befestigungseinrichtung 10" gemäß dem vorliegenden Ausführungsbeispiel nach Fig. 8 einen einteiligen Befestigungsvorsprung 15" auf, bei welchem die beiden zur Außenseite gewandten Seitenwandabschnitte 19a und 19b die Anschlagsabschnitte für ein zugeordnetes System zum Begrenzen des Lenkeinschlagwinkels darstellen. Eine Funktionseinheit 20 wird im distalen Endbereich des einteiligen Befestigungsvorsprungs 15" angebracht und ebenfalls mittels einer Schraubverbindung das Schraubenloch 18 beinhaltend befestigt.

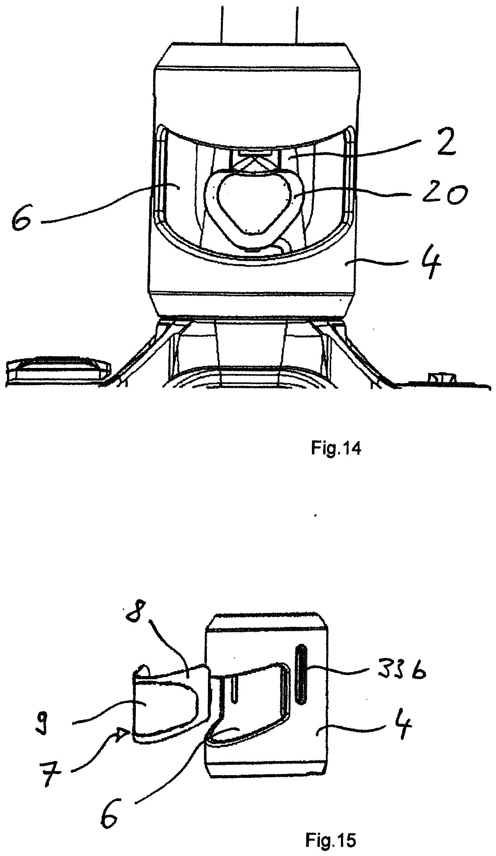

Im Unterschied zu den vorhergehenden Ausführungsbeispielen können vorliegend die Schraubverbindung 13 des Befestigungsabschnitts 11 sowie der Spalt 12 zum Erreichen der Klemmwirkung des Befestigungsabschnitts 11 in Umfangsrichtung versetzt zu dem Befestigungsvorsprung 15" angeordnet werden. Dadurch wird trotz einteiliger Ausgestaltung des Befestigungsvorsprungs 15" mittels des nun außerhalb des Befestigungsvorsprungs 15" liegenden Spaltes 12 eine feste Klemmwirkung erzielt, ohne die Befestigung der Funktionseinheit 20 an der Befestigungseinrichtung 10" zu beeinflussen. Ein Vorteil dieser Ausführungsform besteht neben einem stabileren einteiligen Befestigungsvorsprung 15" darin, dass aufgrund der in Umfangsrichtung versetzten Lage der Schraubverbindung 13 ein einfacherer Zugang zu der Schraubverbindung 13 bei Vorsehen einer im vorderen Bereich des Steuerrohrs 4 angeordneten Ausschnittsöffnung 6 möglich ist, wie in Figur 14 dargestellt ist.

Die Befestigungseinrichtung 10, 10' bzw. 10" kann beispielsweise aus einem Faserverbundwerkstoff (vorzugsweise kohlenstofffaserverstärkter Kunststoff, glasfaserverstärkter Kunststoff, aramidfaserverstärkter Kunststoff), einem metallischen Werkstoff (vorzugsweise eine Aluminiumlegierung), einem thermoplastischen Kunststoff (vorzugsweise PP, PE, PA66, ABS), einem Elastomer (vorzugsweise natürlicher/künstlicher Kautschuk) oder dergleichen hergestellt sein. Auch können verschiedene Bestandteile der Befestigungseinrichtung 10, 10' bzw. 10" aus jeweils einem der vorhergesagten Materialien bestehen. Es können vorteilhaft auch besonders stoßdämpfende Materialien verwendet werden, um einen gewünschten Energieabbau im Falle bestimmter Krafteinwirkungen zu erzielen.

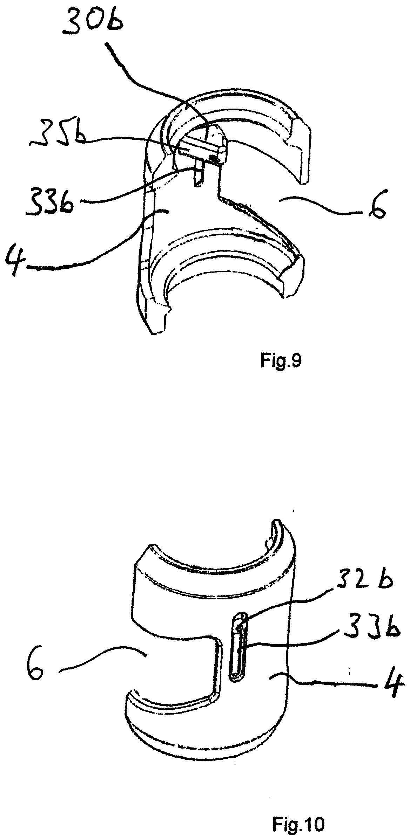

Als den oben genannten Anschlagsabschnitten 19a, 19b entsprechend zugeordnete Gegenanschlagselemente für ein zugeordnetes System zum Begrenzen des Lenkeinschlagwinkels können beispielsweise separat ausgestaltete Elemente vorgesehen sein, wie beispielhaft in den Figuren 9 und 10 in jeweiligen Schnittansichten eines Steuerrohrs 4 illustriert ist. In Figur 9 ist von den beiden Gegenanschlagselementen 30a, 30b lediglich das Gegenanschlagselement 30b auf einer Seite der Ausschnittsöffnung 6 illustriert, welches gemäß dem dargestellten Ausführungsbeispiel beispielhaft als in etwa dreiecksförmiges Gegenanschlagselement 30b ausgestaltet ist. Es ist für einen Fachmann offensichtlich, dass spiegelsymmetrisch auf der gegenüberliegenden Seite in analoger Weise ein weiteres Gegenanschlagselement 30a mit analoger Befestigung vorgesehen ist. Die beiden Gegenanschlagselemente 30a, 30b können entweder einteilig mit einem entsprechenden Rahmenabschnitt bzw. als integraler Bestandteil des Steuerrohrs 4, zum Beispiel in Form einer Schiene oder dergleichen, ausgebildet sein oder wie in den Figuren 9 und 10 exemplarisch illustriert ist, mittels einer Schraubverbindung im Inneren des Steuerrohrs 4 fest angebracht sein, wobei in Figur 10 lediglich die Schraubverbindung 32b dargestellt ist. Rahmenseitig als integrale Lenkeinschläge vorgesehene Gegenanschlagselemente können beispielsweise auch als Zapfen oder Stege im Inneren des Steuerrohrs 4 an einer fest vorgegebenen Position vorgesehen sein.

Hierbei kann auch vorteilhaft vorgesehen sein, dass die Schraubverbindung 32b mittels eines im Steuerrohr 4 vertikal vorgesehenen Langlochs 33b in vertikaler Richtung höhenverstellbar ausgebildet ist, was in analoger Weise auch für das gegenüberliegende zweite Gegenanschlagselement 30a gilt. Folglich können die Gegenanschlagselemente 30a, 30b auf eine entsprechende Höhenpositionierung der Anschlagsabschnitte 19a, 19b der Schenkel 17a, 17b der Befestigungseinrichtung 10' in geeigneter Weise eingestellt werden.

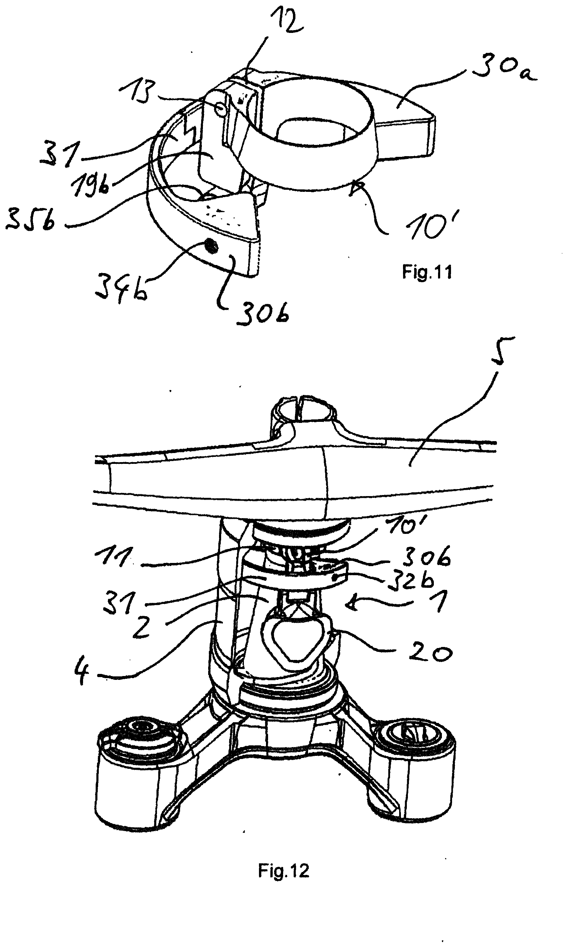

Fig. 11 illustriert in perspektivischer Darstellung eine weitere vorteilhafte Ausgestaltung der Gegenanschlagselemente 30a und 30b, wobei vorliegend die beiden Gegenanschlagselemente 30a, 30b mittels eines gemeinsamen Verbindungssteges 31 miteinander verbunden sind. Dadurch können, für den Fall, dass der Verbindungssteg 31 nicht fest mit dem Rahmen verbunden ist, die beiden Gegenanschlagselemente 30a, 30b vorteilhaft präzise auf dieselbe Höhenlage eingestellt werden. In Fig. 11 ist ferner lediglich das der Schraubverbindung 32b zugeordnete Schraubenloch 34b ersichtlich, wobei dies für das gegenüberliegende der Gegenanschlagselement 30a analog vorgesehen ist.

Die beiden Gegenanschlagselemente 30a, 30b weisen den Anschlagsabschnitten 19a, 19b der Befestigungseinrichtung 10' jeweils zugeordnete Gegenanschlagsabschnitte 35a, 35b auf, von denen in Figur 11 lediglich der eine Gegenanschlagsabschnitt 35b ersichtlich ist und die in ihren geometrischen Abmessungen vorzugsweise derart ausgebildet sind, dass bei einer Drehbewegung des Lenkers eine Begrenzung des Lenkeinschlagwinkels des Fahrrads und/oder LEVs dadurch bewerkstelligt wird, dass die jeweiligen Anschlagsabschnitte 19a, 19b des Befestigungsvorsprungs 15' in Anlage mit den jeweils zugeordneten Gegenanschlagsabschnitte 35a, 35b der Gegenanschlagselemente 30a, 30b gelangen.

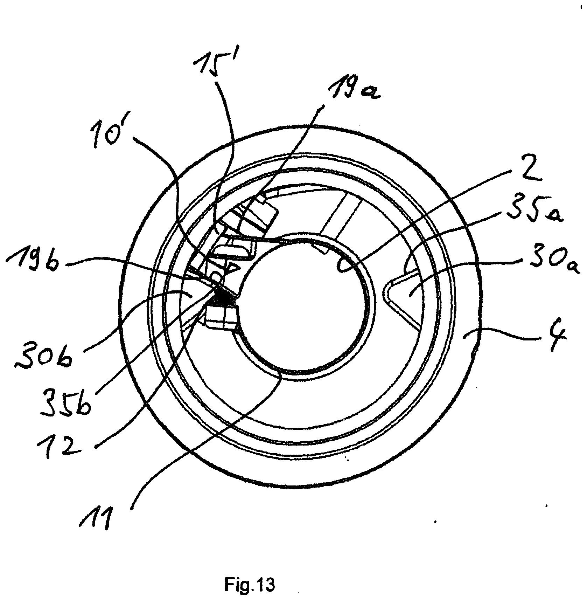

Diese Wirkungsweise wird im Folgenden anhand der Figuren 12 und 13 näher erläutert, wobei Fig. 12 eine perspektivische Ansicht eines verbauten Fahrunterstützungssystems 1 von vorne in Schnittdarstellung und Fig. 13 eine Draufsicht auf das in ein Steuerrohr 4 eingesetztes Fahrunterstützungssystem 1 illustrieren.

In den Figuren 12 und 13 ist jeweils eine maximale Lenkbewegung des Lenkers 5 zur linken Seite hin in Fahrtrichtung gesehen dargestellt, so dass folglich die Begrenzung des Lenkeinschlagwinkels aufgrund der Anlage des Anschlagsabschnitts 19b des Befestigungsvorsprungs 15' der Befestigungseinrichtung 10' an dem zugeordneten Gegenanschlagselement 30b illustriert ist. Die Befestigungseinrichtung 10' ist mit ihrem in etwa ringförmigen Klemmabschnitt bzw. Befestigungsabschnitt 11 auf dem Gabelschaft 2 des Fahrrads und/oder LEVs geklemmt, wobei mittels des Spaltes 12 und der zugeordneten Schraubverbindung 13 der Innendurchmesser des ringförmigen Befestigungsabschnitts 11 variierbar ist, wodurch eine feste Anbringung der Befestigungseinrichtung 10' an dem zugeordneten Abschnitt des Gabelschaftes 2 mittels einer reibschlüssigen Klemmverbindung mit einer vorbestimmten Reibschlusskraft gewährleistet wird. Diesbezüglich wird auf die bereits oben getätigten Ausführungen verwiesen.

Im Falle eines maximalen Lenkeinschlags, wie in den Figuren 12 und 13 beispielhaft für einen linksseitigen Lenkeinschlag illustriert ist, gelangt folglich bei einem vorbestimmten Lenkeinschlagwinkel auf der linken Seite der Anschlagsabschnitt 19b des Befestigungsvorsprungs 15' in Anlage mit dem entsprechend zugeordneten Gegenanschlagselement 30b. Analoges gilt selbstverständlich bei einem vorbestimmten Lenkeinschlag zur rechten Seite hin. Somit kann ein beidseitiger vorbestimmter und damit begrenzter Lenkeinschlagwinkel durch ein geeignetes Zusammenspiel der Ausgestaltungen und Positionierungen der jeweiligen Anschlagsabschnitte 19a, 19b und Gegenanschlagsabschnitte 35a, 35b der Gegenanschlagselemente 30a, 30b gewährleistet werden.

Es ist für einen Fachmann offensichtlich, dass das vorliegend beschriebene mitlenkbare Fahrunterstützungssystem 1 auch alternativ oder zusätzlich mit eigenständigen andersartigen Systemen zur Begrenzung des Lenkeinschlagwinkels kombiniert werden kann. Hier kann vorteilhaft eine Befestigungseinrichtung 10 gemäß dem ersten Ausführungsbeispiel gewählt werden. Bei den zweiten und dritten bevorzugten Ausführungsbeispielen ist allerdings das System zur Begrenzung des Lenkeinschlagwinkels bei der Ausgestaltung der Befestigungseinrichtung 10' bzw. 10" zumindest teilweise mitrealisiert, sodass vorteilhaft lediglich die jeweiligen Gegenanschlagselemente rahmenseitig vorzusehen sind.

Die oben beschriebenen einzelnen Komponenten des mitlenkbaren Fahrunterstützungssystems 1 sind vorzugsweise jeweils derart dimensioniert, dass ein ausreichend großer Freiraum im Inneren des Steuerrohrs 4 zur Aufnahme von etwaigen Kabeln oder dergleichen derart vorgesehen ist, sodass es bei Drehbewegungen des Lenkrads zu keinerlei Kabelschädigungen aufgrund eines zu engen Bauraums kommen kann.

Die Figuren 14 und 15 illustrieren jeweils ein Steuerrohr 4 mit einem aufgenommenen Fahrunterstützungssystem 1 gemäß einem der Ausführungsbeispiele der vorliegenden Erfindung, wobei das Steuerrohr 4 eine Ausschnittsöffnung 6 im vorderen Bereich aufweist. Wie in den Figuren 14 und 15 ersichtlich ist, ist gemäß dem vorliegenden Ausführungsbeispiel die Ausschnittsöffnung 6 beispielsweise in etwa visierförmig ausgebildet, d.h., in der Formgebung an das Visier eines Motorradhelms angelehnt. Die Ausschnittsöffnung 6 weist vorzugsweise eine derartige geometrische Abmessung auf, dass ihre umfängliche Breitenerstreckung sowie ihre vertikale Höhenerstreckung an die Wirkungsweise der Funktionseinheit 20 und/oder den gewünschten Lenkeinschlagwinkel entsprechend angepasst sind. Stellt beispielsweise die Funktionseinheit 20 ein Lichtsystem dar, ist der Ausschnitt 6 vorteilhaft derart zu wählen, dass bei jedem möglichen Lenkeinschlagwinkel das von dem Lichtsystem ausgesendete Licht den gewünschten Ausleuchtbereich vor dem Fahrrad bildet. Die Größe der Ausschnittsöffnung 6 richtet sich folglich bei einem verwendeten Lichtsystem nach dem Lichtkegel und dem Rotationswinkel des Lichtsystems. Entsprechendes gilt für den Fall, dass die Funktionseinheit 20 weitere Systeme oder alternativ komplett andere Systeme aufweist.

Die Ausschnittsöffnung 6 dient vorteilhaft auch als Revisionsöffnung zur Montage, zum Austausch und/oder zur Einstellung der Funktionseinheit 20 und/oder der Befestigungseinrichtung 10, 10' bzw. 10", da ein Benutzer über den Zugang der Ausschnittsöffnung 6 auf einfache Weise an die zu modifizierenden oder auszutauschenden Bauteile gelangen kann. Aufgrund der Ausschnittsöffnung 6 kann beispielsweise bei einer verdrehten Befestigungseinrichtung 10, 10' am Gabelschaft 2 infolge beispielsweise eines starken Anschlages des Lenkers ein einfaches Neuausrichten des Fahrunterstützungssystems 1 über die Ausschnittsöffnung 6 erfolgen.

Wie in Fig. 15 ersichtlich ist, ist ferner ein Deckel 7 vorgesehen, welcher vorzugsweise bündig die Ausschnittsöffnung 6 verschließen kann. Der Deckel 7 kann beispielsweise mittels einer Clipsverbindung, einer Klemmverbindung, einer Schraubverbindung, einer magnetischen Verbindung oder dergleichen an der Ausschnittsöffnung 6 angebracht werden. Der Deckel 7 weist gemäß dem vorliegenden Ausführungsbeispiel einen vorzugsweise umlaufenden Deckelrahmen 8 auf, welcher den im mittleren Bereich vorgesehenen transparenten Abschnitt 9 umläuft. Dadurch ist zum einen eine stabile Ausgestaltung des Deckels 7 und zudem eine geeignete Austrittsmöglichkeit der durch die Funktionseinheit 20 ausgesendeten Strahlen gewährleistet. Der Deckel 7 ermöglicht durch den transparenten Bereich einerseits das Hindurchtreten zum Beispiel des Lichtkegels bei Verwendung eines Lichtsystems als Funktionseinheit 20 und liefert zudem einen Schutz des Fahrunterstützungssystems 1 vor Witterungseinflüssen wie Wasser und/oder Schmutz und kann zudem im Falle einer Abnahmesicherung eine Zerstörung oder einen Diebstahl des Fahrunterstützungssystems 1 erschweren oder gänzlich verhindern. Folglich kann Deckel 7 als Funktionsbauteil ausgebildet sein, beispielsweise zum Schutz der Funktionseinheit 20 vor Witterungseinflüssen, als Schutz der Funktionseinheit 20 vor Diebstahl oder Beschädigung wie oben bereits erwähnt, als Linsensystem zur Bündelung und/oder Reduktion des Lichtkegels, als Reflektoreinheit, als Tönungsmittel zur Abdunkelung bestimmter Lichtaustrittsbereiche oder dergleichen.

Somit wird mittels des erfindungsgemäßen mitlenkbaren Fahrunterstützungssystems 1 gewährleistet, dass bei einer Befestigung des Fahrunterstützungssystems 1 an dem in einem Steuerrohr 4 eingesetzten Gabelschaft 2 des Fahrrads und/oder LEVs mittels der Befestigungseinrichtung 10, 10' bzw. 10" eine mitgelenkte Drehbewegung der Funktionseinheit 20 innerhalb des Steuerrohrs 4 hindernisfrei erfolgt. Ferner weist das mitlenkbare Fahrunterstützungssystem 1 bereits entsprechende Anschlagsabschnitte 19a, 19b auf, welche in einem zugeordneten System zum Begrenzen des Lenkeinschlagwinkels Verwendung finden können.

Obwohl die vorliegende Erfindung anhand bevorzugter Ausführungsbeispiele vorliegend beschrieben wurde, ist sie darauf nicht beschränkt, sondern auf vielfältige Weise modifizierbar solange sie unter den Schutzbereich der nachfolgenden Ansprüche fällt.

Vorteilhaft ist ferner eine komplette Integration der Kabelverlegung im Steuerrohr 4 bzw. im Vorbau des Fahrrads und/oder LEVs derart, dass beispielsweise der Lichtkegel des Lichtsystems der Funktionseinheit 20 nicht durch außerhalb des Lenker- oder Steuerrohrbereichs verlaufende Kabel unterbrochen bzw. gestört wird.

### BEZUGSZEICHENLISTE

- 1: mitlenkbares Fahrunterstützungssystem
- 2: Gabelschaft
- 4: Steuerrohr
- 5: Lenker
- 6: Ausschnittsöffnung
- 7: Deckel
- 8: Deckelrahmen
- 9: transparenter Abschnitt
- 10, 10', 10": Befestigungseinrichtung
- 11: Befestigungsabschnitt
- 12: Spalt
- 13: Schraubverbindung
- 15, 15', 15": Befestigungsvorsprung
- 16a, 16b: Schenkel
- 17a, 17b: Schenkel
- 18: Schraubenloch
- 19a, 19b: Anschlagsabschnitte
- 20: Funktionseinheit
- 21: Schraube
- 22: Befestigungsabschnitt
- 23: Blende
- 24: konkaver Anlageabschnitt
- 25: konvexer Abschnitt
- 30a, 30b: Gegenanschlagselemente
- 31: Verbindungssteg
- 32b: Schraubverbindung
- 33b: Langloch
- 34b: Schraubenloch
- 35a, 35b: Gegenanschlagsabschnitte
- L: Längsachse

## Patentansprüche

1. Fahrrad und/oder LEV, mit einem Steuerrohr (4), einem in das Steuerrohr (4) einsetzbaren Gabelschaft (2) und einem mitlenkbaren Fahrunterstützungssystem (1),wobei das Fahrunterstützungssystem (1) aufweist: eine Befestigungseinrichtung (10; 10'), welche einen Befestigungsabschnitt (11) für eine Befestigung des Fahrunterstützungssystems (1) an dem Gabelschaft (2) des Fahrrads und/oder LEVs aufweist; und
eine Funktionseinheit (20), welche mit der Befestigungseinrichtung (10; 10', 10") derart verbunden ist und eine derartige geometrische Abmessung aufweist, dass bei einer Befestigung des Fahrunterstützungssystems (1) an dem in das Steuerrohr (4) eingesetzten Gabelschaft (2) des Fahrrads und/oder LEVs mittels der Befestigungseinrichtung (10; 10', 10") eine mitgelenkte Drehbewegung der Funktionseinheit (20) innerhalb des Steuerrohrs (4) des Fahrrads und/oder LEVs hindernisfrei gewährleistet ist, **dadurch gekennzeichnet, dass** die Funktionseinheit (20) als Frontlichtsystem, Radarsystem, Kamerasystem, Lasersystem, Ultraschallsystem und/oder Lidarsystem ausgebildet ist.

2. Fahrrad und/oder LEV, nach Anspruch 1, **dadurch gekennzeichnet, dass** der Befestigungsabschnitt (11) der Befestigungseinrichtung (10; 10', 10") als mittels einer reibschlüssigen Verbindung, vorzugsweise einer Schraubverbindung (13), klemmbarer Ringklemmabschnitt ausgebildet ist, vorzugsweise für eine reibschlüssige Klemmung an einem zylindrischen Abschnitt des Gabelschaftes (2), wobei vorzugsweise das Anzugsdrehmoment dieser Verbindung in einem Bereich von 1 bis 5 Nm, bevorzugt in einem Bereich von 2 bis 4 Nm, liegt und weiter bevorzugt 3 Nm beträgt.

3. Fahrrad und/oder LEV nach Anspruch 2, **dadurch gekennzeichnet, dass** der Ringklemmabschnitt für einen geeigneten Energieabbau im Falle einer rotatorischen Krafteinwirkung mittels eines vorbestimmten Anzugsdrehmomentes der Schraubverbindung (13) mit einer vorbestimmten Reibschlusskraft an dem Gabelschaft (2) angebracht ist, wobei vorzugsweise bei einer derartigen reibschlüssigen Verbindung ein maximal übertragbares Drehmoment bzw. Losbrechmoment in einem Bereich von vorzugsweise 4 bis 90 Nm, bevorzugt in einem Bereich von 10 bis 70 Nm und weiter bevorzugt in einem Bereich von 15 bis 50 Nm vorgesehen ist.

4. Fahrrad und/oder LEV nach wenigstens einem der vorhergehenden Ansprüche, **dadurch gekennzeichnet, dass** die Befestigungseinrichtung (10; 10',10") einen Befestigungsvorsprung (15; 15') aufweist, welcher sich von einem radialen Randbereich aus in etwa in Richtung einer Längsachse (L) der Befestigungseinrichtung (10; 10',10") erstreckt, an welchem die Funktionseinheit (20), mittels einer Schraubverbindung, Klickverbindung, Klemmverbindung oder magnetischen Verbindung angebracht oder einteilig angeformt ist.

5. Fahrrad und/oder LEV nach Anspruch 4, **dadurch gekennzeichnet, dass** der Befestigungsvorsprung (15; 15') einen sich in Richtung der Längsachse (L) erstreckenden Stegabschnitt aufweist, welcher vorzugsweise zwischen dem Befestigungsabschnitt (11) der Befestigungseinrichtung (10; 10',10") und der Funktionseinheit (20) angeordnet ist.

6. Fahrrad und/oder LEV nach Anspruch 5, **dadurch gekennzeichnet, dass** der Stegabschnitt zwei in etwa sich in Richtung der Längsachse (L) parallel zueinander erstreckende und durch einen Spalt (12) voneinander beabstandete Schenkel (16a, 16b; 17a, 17b) aufweist, wobei die Funktionseinheit (20) an zumindest einem der Schenkel angebracht ist.

7. Fahrrad und/oder LEV nach Anspruch 5 oder 6, **dadurch gekennzeichnet, dass** die Schenkel (17a, 17b) des Stegabschnitts eine Anschlagseinrichtung zum Begrenzen des Lenkeinschlagwinkels des Fahrrads und/oder LEVs aufweisen, wobei vorzugsweise jeweils die von dem Stegabschnitt zur Seite gewandten Seitenabschnitte der jeweiligen Schenkel (17a, 17b) Anschlagsabschnitte (19a, 19b) der Anschlagseinrichtung bilden.

8. Fahrrad und/oder LEV nach Anspruch 7, **dadurch gekennzeichnet, dass** als der Anschlagseinrichtung zugeordnete Gegenanschlagseinrichtung zum Begrenzen des Lenkeinschlagwinkels rahmenseitige Gegenanschlagselemente (30a, 30b) an dem Steuerrohr (4) des Fahrrads und/oder LEVs vorgesehen sind, welche beispielsweise einteilig mit dem Steuerrohr (4) des Fahrrads und/oder LEVs ausgebildet oder, insbesondere mittels einer Schraubverbindung (22), in dem Steuerrohr (4) befestigte Gegenanschlagselemente (30a, 30b) vorgesehen sind, welche vorzugsweise als über im Steuerrohr (4) vorgesehene Langlöcher (33b) höhenverstellbare Gegenanschlagselemente (30a, 30b) ausgebildet sind.

9. Fahrrad und/oder LEV nach wenigstens einem der vorhergehenden Ansprüche, **dadurch gekennzeichnet, dass** die Funktionseinheit (20) eine Blende (23) aufweist, welche als Linsensystem zur Bündelung und/oder Reduktion des Lichtkegels, als Reflektoreinheit oder als Tönungsmittel zur Abdunkelung bestimmter Lichtaustrittsbereiche ausgebildet ist, wobei vorzugsweise ferner ein Visier oder Schild zum Richten des Lichtkegels oberhalb der Blende (23) vorgesehen ist.

10. Fahrrad und/oder LEV nach wenigstens einem der vorhergehenden Ansprüche, **dadurch gekennzeichnet, dass** die Funktionseinheit (20) in ihrer geometrischen Ausgestaltung derart an die Kontur des zugeordneten Abschnitts des Gabelschaftes (2) und/oder der Innenkrümmung des Steuerrohrs (4) angepasst ist, dass eine in etwa bündige Anlage an dem zugeordneten Abschnitt des Gabelschaftes (2) und/oder eine kollisionsfreie Drehbewegung gewährleistet ist.

11. Fahrrad und/oder LEV nach einem der vorhergehenden Ansprüche, **dadurch gekennzeichnet, dass** das Steuerrohr (4) des Fahrrads und/oder LEVs im vorderen Bereich eine Ausschnittsöffnung (6) aufweist, welche in ihrer geometrischen Abmessung, ihrer umfänglichen Erstreckung und/oder ihrer Transparenz an die Wirkungsweise der Funktionseinheit (20) entsprechend angepasst ist.

12. Fahrrad und/oder LEV nach Anspruch 11, **dadurch gekennzeichnet, dass** die Ausschnittsöffnung (6) als Revisionsöffnung zur Montage, Austausch und/oder zur Einstellung der Funktionseinheit (20) und/oder der Befestigungseinrichtung (10; 10') vorgesehen ist.

13. Fahrrad und/oder LEV nach Anspruch 11 oder 12, **dadurch gekennzeichnet, dass** die Ausschnittsöffnung (6) mittels eines vorzugsweise zumindest teilweise transparenten Deckels (7) verschließbar ist, welcher mittels einer Clipsverbindung, Klemmverbindung, Schraubverbindungoder magnetischen Verbindung an der Ausschnittsöffnung (6), vorzugsweise bündig, anbringbar ist.

14. Fahrrad und/oder LEV nach Anspruch 13, **dadurch gekennzeichnet, dass** der transparente Deckel (7) als Funktionsbauteil zum Schutz der Funktionseinheit (20) vor Witterungseinflüssen, als Schutz der Funktionseinheit (20) vor Diebstahl oder Beschädigung, als Linsensystem zur Bündelung und/oder Reduktion des Lichtkegels, als Reflektoreinheitoder als Tönungsmittel zur Abdunkelung bestimmter Lichtaustrittsbereiche ausgebildet ist.

## Claims

1. Bicycle and/or LEV, having a head tube (4), a fork steerer tube (2) that can be inserted into the head tube (4), and a steerable ride assist system (1), wherein the ride assist system (1) comprises: a fastening device (10; 10'), which comprises a fastening section (11) for fastening the ride assist system (1) to the fork steerer tube (2) of the bicycle and/or LEV; and
a functional unit (20), which is connected to the fastening device (10; 10 ', 10") and comprises such a geometric dimension that, when the ride assist system (1) is fastened to the fork steerer tube (2), which is inserted into the head tube (4), of the bicycle and/or LEV, by means of the fastening device (10; 10', 10") a steered rotational movement of the functional unit (20) within the head tube (4) of the bicycle and/or LEV is ensured without hindrance,
**characterised in that**
the functional unit (20) is designed as a front light system, radar system, camera system, laser system, ultrasound system and/or lidar system.

2. Bicycle and/or LEV, according to claim 1, **characterised in that** the fastening section (11) of the fastening device (10; 10', 10") is designed as an annular clamping section which can be clamped by means of a frictional connection, preferably a screw connection (13), preferably for a frictional clamping to a cylindrical section of the fork steerer tube (2), wherein the tightening torque of this connection is preferably in a range from 1 to 5 Nm, preferably in a range from 2 to 4 Nm, and more preferably is 3 Nm.

3. Bicycle and/or LEV according to claim 2, **characterised in that** the ring clamping section is attached to the fork steerer tube (2) with a predetermined frictional connection force for suitable energy dissipation in the event of a rotational force action by means of a predetermined tightening torque of the screw connection (13), wherein a maximum transmissible torque or breakaway torque in a range of preferably 4 to 90 Nm, preferably in a range of 10 to 70 Nm and more preferably in a range of 15 to 50 Nm is provided in such a frictional connection.

4. Bicycle and/or LEV according to at least one of the preceding claims, **characterised in that** the fastening device (10; 10', 10 ") comprises a fastening projection (15; 15'), which extends from a radial edge region approximately in the direction of a longitudinal axis (L) of the fastening device (10; 10', 10"), to which the functional unit (20) is attached or integrally formed by means of a screw connection, click connection, clamping connection or magnetic connection.

5. Bicycle and/or LEV according to claim 4, **characterised in that** the fastening projection (15; 15') comprises a bar section that extends in the direction of the longitudinal axis (L), which is preferably arranged between the fastening section (11) of the fastening device (10; 10', 10") and the functional unit (20).

6. Bicycle and/or LEV according to claim 5, **characterised in that** the bar section has two limbs (16a, 16b; 17a, 17b) that extend approximately parallel to one another in the direction of the longitudinal axis (L) and are spaced apart from one another by a gap (12), wherein the functional unit (20) is attached to at least one of the limbs.

7. Bicycle and/or LEV according to claim 5 or 6, **characterised in that** the limbs (17a, 17b) of the bar section comprise a stop device for limiting the steering angle of the bicycle and/or LEV, wherein the side sections of the respective limbs (17a, 17b) that face sideways from the bar section preferably respectively form stop sections (19a, 19b) of the stop device.

8. Bicycle and/or LEV according to claim 7, **characterised in that** frame-side counter-stop elements (30a, 30b) are provided on the head tube (4) of the bicycle and/or LEV as a counter-stop device that is allocated to the stop device for limiting the steering angle, which counter-stop elements are designed, for example, as a single piece with the head tube (4) of the bicycle and/or LEV or counter-stop elements (30a, 30b) are provided, in particular by means of a screw connection (22), fastened in the head tube (4), which counter-stop elements (30a, 30b) are preferably designed as counter-stop elements (30a, 30b) that are adjustable in height via elongated holes (33b) that are provided in the head tube (4).

9. Bicycle and/or LEV according to at least one of the preceding claims, **characterised in that** the functional unit (20) has an aperture (23), which is designed as a lens system for focusing and/or reducing the light cone, as a reflector unit or as a tinting agent for darkening certain light exit regions, wherein a visor or shield for directing the light cone is preferably also provided above the aperture (23).

10. Bicycle and/or LEV according to at least one of the preceding claims, **characterised in that** the functional unit (20) is adapted in its geometric design to the contour of the allocated section of the fork steerer tube (2) and/or the inner curvature of the head tube (4) in such a manner that an approximately flush contact with the allocated section of the fork steerer tube (2) and/or a collision-free rotational movement is ensured.

11. Bicycle and/or LEV according to one of the preceding claims, **characterised in that** the head tube (4) of the bicycle and/or LEV has a cut-out opening (6) in the front region, which cut-out opening is adapted in terms of its geometric dimension, its circumferential extension and/or its transparency to the mode of operation of the functional unit (20).

12. Bicycle and/or LEV according to claim 11, **characterised in that** the cut-out opening (6) is provided as an inspection opening for mounting, replacing and/or adjusting the functional unit (20) and/or the fastening device (10; 10').

13. Bicycle and/or LEV according to claim 11 or 12, **characterised in that** the cut-out opening (6) can be closed by means of a preferably at least partially transparent cover (7), which can be attached, preferably flush, to the cut-out opening (6) by means of a clip connection, clamping connection, screw connection or magnetic connection.

14. Bicycle and/or LEV according to claim 13, **characterised in that** the transparent cover (7) is designed as a functional component for protecting the functional unit (20) against weather influences, as protection of the functional unit (20) against theft or damage, as a lens system for focusing and/or reducing the light cone, as a reflector unit or as a tinting agent for darkening certain light exit regions.

## Revendications

1. Bicyclette et/ou LEV, ayant un tube de direction (4), un tube de fourche (2) pouvant être inséré dans le tube de direction (4), et un système d'aide à la conduite (1) pouvant être dirigé, dans lequel le système d'aide à la conduite (1) comporte : un dispositif de fixation (10 ; 10') qui comporte une partie de fixation (11) pour fixer le système d'aide à la conduite (1) sur le tube de fourche (2) de la bicyclette et/ou du LEV ; et
une unité fonctionnelle (20) qui est reliée au dispositif de fixation (10 ; 10', 10") et qui a une dimension géométrique telle que, lorsque le système d'aide à la conduite (1) est fixé sur le tube de fourche (2) de la bicyclette et/ou du LEV qui est inséré dans le tube de direction (4) au moyen du dispositif de fixation (10 ; 10', 10"), un mouvement de rotation dirigé de l'unité fonctionnelle (20) est assuré sans obstacle à l'intérieur du tube de direction (4) de la bicyclette et/ou du LEV,
**caractérisé en ce que**
l'unité fonctionnelle (20) est conçue comme un système d'éclairage avant, un système radar, un système de caméra, un système laser, un système à ultrasons, et/ou un système lidar.

2. Bicyclette et/ou LEV, selon la revendication 1, **caractérisé en ce que** la partie de fixation (11) du dispositif de fixation (10 ; 10', 10") est conçue comme une partie de serrage annulaire pouvant être serrée au moyen d'un assemblage par friction, de préférence un assemblage vissé (13), de préférence pour un serrage par friction sur une partie cylindrique du tube de fourche (2), dans lequel le couple de serrage de cet assemblage est de préférence dans une plage de 1 à 5 Nm, de manière préférée dans une plage de 2 à 4 Nm, et de manière encore plus préférée de 3 Nm.

3. Bicyclette et/ou LEV selon la revendication 2, **caractérisé en ce que** la partie de serrage annulaire est montée sur le tube de fourche (2) pour une réduction d'énergie adaptée en cas d'application d'une force de rotation au moyen d'un couple de serrage prédéterminé de l'assemblage vissé (13) avec une force de friction prédéterminée, dans lequel un couple transmissible maximal ou un couple de démarrage est de préférence prévu dans une plage de préférence de 4 à 90 Nm, de manière préférée dans une plage de 10 à 70 Nm et de manière encore plus préférée de 15 à 50 Nm lors d'un assemblage par friction de ce type.

4. Bicyclette et/ou LEV selon au moins l'une des revendications précédentes, **caractérisé en ce que** le dispositif de fixation (10 ; 10', 10") comporte une saillie de fixation (15 ; 15') qui s'étend à partir d'une zone de bord radiale sensiblement en direction d'un axe longitudinal (L) du dispositif de fixation (10 ; 10', 10"), saillie sur laquelle l'unité fonctionnelle (10) est montée ou formée d'un seul tenant au moyen d'un assemblage vissé, d'un assemblage par encliquetage, d'un assemblage par serrage ou d'un assemblage magnétique.

5. Bicyclette et/ou LEV selon la revendication 4, **caractérisé en ce que** la saillie de fixation (15 ; 15') comporte une partie d'âme s'étendant en direction de l'axe longitudinal (L), laquelle partie d'âme est de préférence agencée entre la partie de fixation (11) du dispositif de fixation (10 ; 10', 10") et l'unité fonctionnelle (20).

6. Bicyclette et/ou LEV selon la revendication 5, **caractérisé en ce que** la partie d'âme comporte deux pattes (16a, 16b ; 17a, 17b) s'étendant parallèlement l'une à l'autre en direction de l'axe longitudinal (L) et séparées l'une de l'autre par un espace (12), dans lequel l'unité fonctionnelle (20) est fixée sur au moins l'une des pattes.

7. Bicyclette et/ou LEV selon la revendication 5 ou 6, **caractérisé en ce que** les pattes (17a, 17b) de la partie d'âme comportent un dispositif de butée pour limiter l'angle de braquage de la bicyclette et/ou du LEV, dans lequel les parties latérales des pattes (17a, 17b) respectives dirigées respectivement vers le côté de la partie d'âme forment des parties de butée (19a, 19b) du dispositif de butée.

8. Bicyclette et/ou LEV selon la revendication 7, **caractérisé en ce que** des éléments de contre-butée (30a, 30b) côté cadre sont prévus sur le tube de direction (4) de la bicyclette et/ou du LEV en tant que dispositif de contre-butée associé au dispositif de butée pour limiter l'angle de braquage, lesquels éléments de contre-butée sont par exemple formés d'un seul tenant avec le tube de direction (4) de la bicyclette et/ou du LEV, ou des éléments de contre-butée (30a, 30b) fixés dans le tube de direction (4) au moyen d'un assemblage vissé (22) sont en particulier prévus, lesquels éléments de contre-butée sont de préférence formés comme des éléments de contre-butée (30a, 30b) réglables en hauteur par des trous oblongs (33b) prévus dans le tube de direction (4).

9. Bicyclette et/ou LEV selon au moins l'une des revendications précédentes, **caractérisé en ce que** l'unité fonctionnelle (20) comporte un diaphragme (23) qui est conçu comme un système de lentilles pour concentrer et/ou réduire le cône de lumière, comme une unité de réflecteur ou comme un moyen de teinture pour obscurcir des zones de sortie de lumière spécifiques, dans lequel une visière ou un écran est en outre de préférence prévu pour diriger le cône de lumière au-dessus du diaphragme (23).

10. Bicyclette et/ou LEV selon au moins l'une des revendications précédentes, **caractérisé en ce que** l'unité fonctionnelle (20) est adaptée, de par sa configuration géométrique, au contour de la partie associée du tube de fourche (2) et/ou à la courbure intérieure du tube de direction (4) de telle sorte qu'un contact sensiblement affleurant est assuré sur la partie associée du tube de fourche (2) et/ou un mouvement de rotation sans collision.

11. Bicyclette et/ou LEV selon l'une des revendications précédentes, **caractérisé en ce que** le tube de direction (4) de la bicyclette et/ou du LEV comporte une ouverture découpée (6) dans la zone avant qui est adaptée en conséquence, de par sa dimension géométrique, son extension circonférencielle et/ou sa transparence, au mode de fonctionnement de l'unité fonctionnelle (20).

12. Bicyclette et/ou LEV selon la revendication 11, **caractérisé en ce que** l'ouverture découpée (6) est prévue sous la forme d'une ouverture de révision pour le montage, le remplacement et/ou le réglage de l'unité fonctionnelle (20) et/ou du dispositif de fixation (10 ; 10').

13. Bicyclette et/ou LEV selon la revendication 11 ou 12, **caractérisé en ce que** l'ouverture découpée (6) peut être obturée au moyen d'un couvercle (7), de préférence au moins partiellement transparent, qui peut être fixé sur l'ouverture découpée (6), de préférence de manière affleurante, au moyen d'un assemblage par encliquetage, d'un assemblage par serrage, d'un assemblage par vissage ou d'un assemblage magnétique.

14. Bicyclette et/ou LEV selon la revendication 13, **caractérisé en ce que** le couvercle transparent (7) est conçu comme un composant fonctionnel pour protéger l'unité fonctionnelle (20) contre les intempéries, comme une protection de l'unité fonctionnelle (20) contre le vol ou l'endommagement, comme un système de lentilles pour concentrer et/ou réduire le cône de lumière, comme une unité de réflecteur ou comme un moyen de teinture pour obscurcir des zones de sortie de lumière spécifiques.
